# EUROPÄISCHE PATENTSCHRIFT

(11) **EP 1 423 594 B1**
(45) Veröffentlichungstag und Bekanntmachung des Hinweises auf die Patenterteilung: **18.07.2007**
(21) Anmeldenummer: 02797894.9
(22) Anmeldetag: 02.09.2002
(51) Int. Cl.: F02D 41/20, F02D 41/40, F02M 65/00

(54) **VERFAHREN UND VORRICHTUNG ZUM ANSTEUERN PIEZOBETRIEBENER KRAFTSTOFF-EINSPRITZVENTILE**
METHOD AND DEVICE FOR CONTROLLING PIEZO-DRIVEN FUEL INJECTION VALVES
PROCEDE ET DISPOSITIF DE COMMANDE POUR SOUPAPES D'INJECTION DE CARBURANT A ACTIONNEMENT PIEZO

(30) Priorität: 05.09.2001 DE 10143502
(43) Veröffentlichungstag der Anmeldung: 02.06.2004
(73) Patentinhaber: SIEMENS AKTIENGESELLSCHAFT, 80333 München (DE)
(72) Erfinder: MELBERT, Joachim, 82041 Deisenhofen (DE)
(86) Internationale Anmeldenummer: PCT/DE2002/003228
(87) Internationale Veröffentlichungsnummer: WO 2003/023213

(56) Entgegenhaltungen:
- WO-A-99/67527
- DE-A- 4 308 811
- DE-A- 4 312 587
- DE-A- 19 921 456
- DE-A- 19 930 309

## Beschreibung

Die Erfindung betrifft ein Verfahren zum Ansteuern piezobetriebener Kraftstoff-Einspritzventile gemäß den Merkmalen nach Anspruch 1. Die Erfindung betrifft auch eine Vorrichtung zur Durchführung dieses Verfahrens gemäß den Merkmalen nach Anspruch 6.

Der Kraftstoff-Einspritzvorgang in Dieselmotoren wird üblicherweise in mehreren Abschnitten durchgeführt, wobei zur Erzielung eines sanfteren Verbrennungsverlaufs jeder Haupteinspritzung eine oder mehrere Vor- oder Nacheinspritzungen zugeordnet sind, bei denen die eingespritzte Kraftstoffmenge klein gegenüber der Haupteinspritzmenge ist.

Für eine präzise Dosierung der Kraftstoffmengen, insbesondere der Kleinmengen und zur Optimierung der Einspritz-Zeitpunkte, sind schnell schaltende Ventile erforderlich, wozu zunehmend piezobetriebene Einspritzventile eingesetzt werden.

Wegen der geringen maximalen Längenänderung der eingesetzten Piezoelemente (stacks) betätigt der Piezoaktor einen hydraulischen Servokreis, welcher dann das Hauptventil bewegt. Mittels einer Ansteuerelektronik wird die elektrische Ansteuerung des Piezoaktors so vorgenommen, dass die gewünschte Kraftstoffmenge eingespritzt wird.

Da es nicht möglich ist, Kraftstoffmengen oder mechanische Bewegungen im-Einspritzventil zu erfassen, werden die elektrischen Steuersignale bei der Einspritzung kleiner Kraftstoffmengen hinsichtlich Ansteuerdauer und Amplitude so ausgelegt, dass ein sicheres Einspritzen erfolgt. Wegen der Sicherheitsvorhalte gegenüber Druckschwankungen in der Kraftstoffzuleitung, Parametertoleranzen des Systems und des weiten Betriebstemperaturbereichs ist damit im allgemeinen eine Kraftstoffmengen-Überdosierung verbunden. Dazu wurde bisher aus der in den Piezoaktor eingespeisten Ladung oder Energie auf die Piezoauslenkung geschlossen.

Aus DE 196 44 521 A1 ist ein Verfahren zur Ansteuerung eines kapazitiven Stellgliedes eines Kraftstoffeinspritzventils bekannt, welchem zur Erzielung eines konstanten Hubs eine diesem Hub zugeordnete Energiemenge zugeführt wird.

In DE 199 30 309 C2 ist ein Verfahren zur Regelung der Einspritzmenge eines Piezo-Kraft-stoff-Einspritzventils beschrieben, bei welchem die Spannung am Piezoaktor nach dessen anfänglicher Aufladung erfasst und daraus der Einspritzbeginn oder die Nadelöffnungszeit bei Vor- und Haupteinspritzung des Einspritzventils ermittelt wird.

Es ist Aufgabe der Erfindung, ein Verfahren anzugeben, welches eine genauere Festlegung der Kraftstoff-Einspritzmenge bei Vor-/Nach-Einspritzungen ermöglicht, und mit dessen Hilfe überwacht werden kann, ob Kraftstoff-Vor-/Nach-Einspritzungen stattfinden oder nicht. Es ist auch Aufgabe der Erfindung, eine Vorrichtung zur Durchführung dieses Verfahrens zu schaffen.

Diese Aufgabe wird erfindungsgemäß bezüglich des Verfahrens durch die Merkmale des Anspruchs 1 und bezüglich der Vorrichtung durch die Merkmale des Anspruchs 6 gelöst.

Das erfindungsgemäße Verfahren beruht auf einer Erfassung und Auswertung der am Piezoaktor bei einem Öffnungsvorgang wirkenden, aus den elektrischen Signalen (des dem Piezoaktor zugeführten Stromes i_{P} und der sich an ihm aufbauenden Spannung Uₚ) ermittelten Kräfte, unter Zuhilfenahme eines nichtlinearen Piezomodells und eines adaptiven Verfahrens zur Bewertung der im Servoventil auftretenden zeitlichen Kraftgradienten.

Dadurch ist es möglich, den Öffnungsvorgang des Einspritzventils unabhängig vom Kraftstoffdruck und der Ventiltemperatur sicher festzustellen und die Ansteuersignale adaptiv so zu gestalten, dass die gewünschten minimalen Kraftstoffeinspritzungen ohne Überdosierung erfolgen.

Nachstehend wird ein Ausführungsbeispiel nach der Erfindung anhand einer schematischen Zeichnung näher erläutert.

In der Zeichnung zeigen:
Figur 1 den einem Piezoaktor bei einem Öffnungsvorgang des Ventils mit oder ohne Kraftstoffeinspritzung zugeführten Strom i_{P} und die sich daraufhin an ihm aufbauende Spannung u_{P},
Figur 2 die an einem Piezoaktor bei einem Öffnungsvorgang des Ventils mit oder ohne Kraftstoffeinspritzung wirkenden Kräfte und die daraus abgeleiteten Größen, und
Figur 3 eine Vorrichtung zur Durchführung des erfindungsgemäßen Verfahrens.

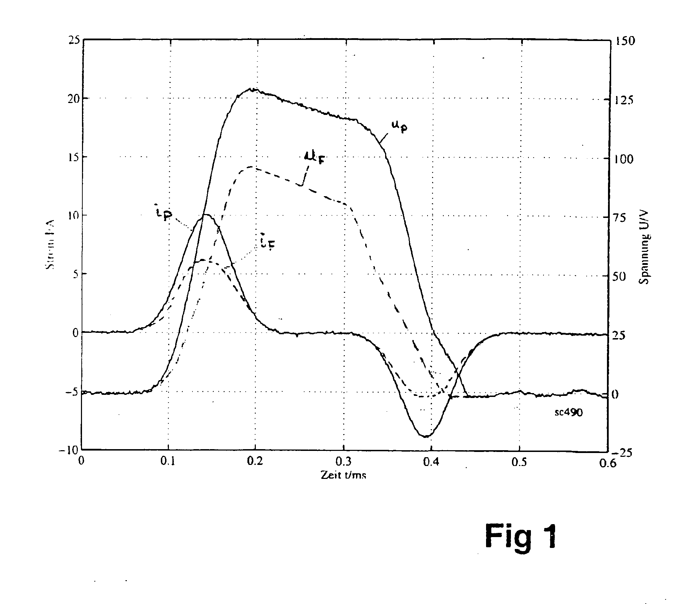

Figur 1 zeigt den einem Piezoaktor bei einem mit einer Kraftstoffeinspritzung verbundenen Öffnungsvorgang des Ventils bei einem -Kraftstoffdruck von beispielsweise 1200bar zugeführten Strom i_{P} und die sich daraufhin am Piezoaktor aufbauende Spannung u_{P} (ausgezogene Kurven), und zum Unterschied dazu einen Strom i_{F} und die sich daraufhin am Piezoaktor aufbauende Spannung u_{F} (gestrichelte Kurven), wenn keine Kraftstoffeinspritzung erfolgt.

Berücksichtigt man Druckschwankungen in der Kraftstoffzuleitung, Parametertoleranzen des Systems und den weiten Betriebstemperaturbereich, so kann aus diesen Kurvenpaaren keine sichere Aussage getroffen werden, ob eine Kraftstoffeinspritzung erfolgt ist oder nicht.

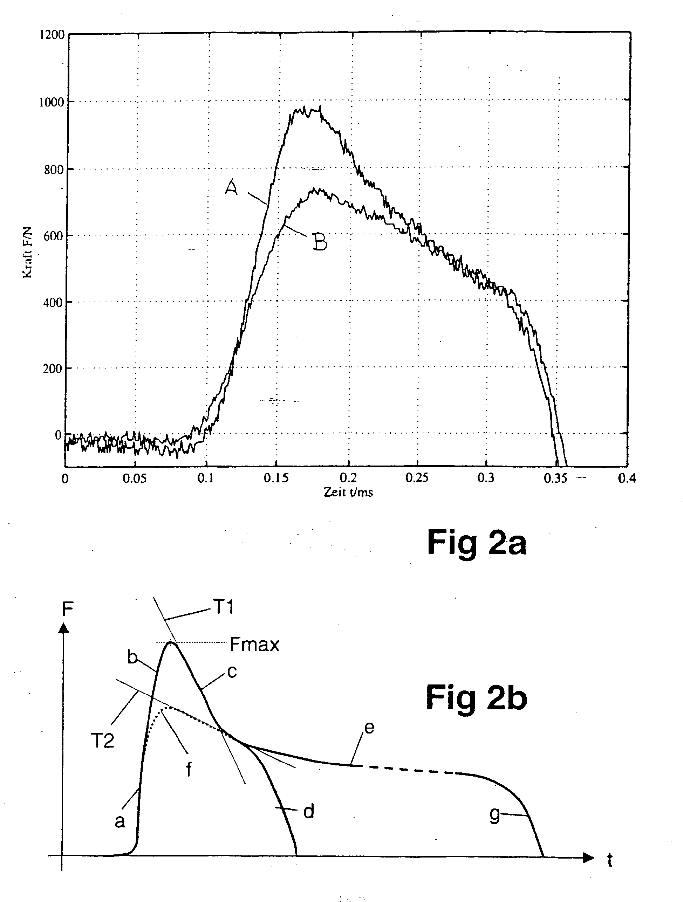

Figur 2a zeigt - wieder bei einem Kraftstoffdruck von beispielsweise 1200bar - die an einem Piezoaktor bei einem Öffnungsvorgang des Ventils mit oder ohne Kraftstoffeinspritzung wirkenden Kräfte, die aus gemessenem Strom i_{P} und gemessener Piezospannung u_{P} ermittelt wurden.

Die in Figur 2a dargestellten, gemessenen Kraftkurven A und B werden in Figur 2b näher erläutert. Bei einer Ansteuerung des Piezoaktors mit einem ausreichenden Strom i_{P} erfolgt zunächst (Kurve A) ein schneller Kraftanstieg vom Wert Null bis zu einem Kraftmaximum Fmax (Öffnen des Ventils, Abschnitte a und b) und anschließend ein schneller Kraftabbau (Abschnitt c), der einem Gradienten -dF/dt, d.h., einer Tangente T1 folgt, und der sich anschließend etwas verlangsamt (Abschnitt e), bevor er, je nach Ansteuerdauer, früher oder später die Nulllinie wieder unterschreitet:
- bei einer minimalen Einspritzdauer/-menge (Voreinspritzung) im Abschnitt d,
- bei einer größeren Einspritzdauer/-menge (z.B. Haupteinspritzung, die durch einen längeren, teilweise gestrichelten Abschnitt e gekennzeichnet ist) im Abschnitt g.

Die Form des Kraftverlaufs der Abschnitte a, b und c ist weitgehend unabhängig von der Art der elektronischen Ansteuerung mittels einer Treiberstufe mit geringem Ausgangswiderstand (Spannungsendstufe), mit hohem Innenwiderstand (Stromendstufe), oder mit einer Umschwingendstufe, in der der Piezoaktor Teil eines Resonanzkreises ist. Der erreichte Maximalwert Fmax ist nur abhängig von dem Strom i_{P}, welcher dem Prezoaktor zugeführt wird.

Erfindungsgemäß erfolgt die Auswertung des - negativen - Kraftsprungs über die Bewertung der elektrischen Signale des Piezoaktors (Strom i_{P}, Spannung u_{P}) mit Hilfe eines nichtlinearen Piezomodells. Die Auswertung erfolgt über den Gradienten -dF/dt der Tangente T1 des Kraftabfalls nach dem Kraftmaximum Fmax. Dieser Gradient hängt stark von Exemplarstreuungen und von den Betriebsbedingungen (Temperatur, Kraftstoffdruck, Piezo-Einspannung, Alterungseffekte etc.) ab.

Besonders vorteilhaft für die Auswertung des Kraftabfalls ist der Einsatz einer hochohmigen Ansteuerung mit Hilfe eines Stromverstärkers.
Alternativ oder ergänzend kann auch, wie bereits erwähnt, der Vergleich des Wegverlaufs oder der Geschwindigkeit des Piezoaktors mit einem Referenzverlauf verwendet werden.

Bei einem gegenüber einer Voreinspritzung langen Haupteinspritzung - bei ausreichender Höhe und Dauer der elektrischen Ansteuerung - kann davon ausgegangen werden, dass das Ventil sicher öffnet. Bei einem Haupteinspritzvorgang lässt sich demnach der Gradient -dF_{H}/dt der Tangente T1 des Kraftabfalls nach dem Kraftmaximum F_{H}max ermitteln und damit der Gradient -dF_{V}/dt für die folgende und ggf. weitere Nach- oder Voreinspritzungen überwachen; durch Vergleich des/der ermittelten Gradienten dieser folgenden Nach- oder Voreinspritzungen mit einem aus dem ermittelten Gradienten der Tangente T1 der Haupteinspritzung bestimmten Grenzwert G lässt sich leicht feststellen, ob Kraftstoffeinspritzung/en stattgefunden hat/haben oder nicht: ist der Betrag |-dF/dt| des Gradienten der Vor/Nacheinspritzung größer als der Grenzwert G, so wird davon ausgegangen, dass eine Vor/Nacheinspritzung stattgefunden hat; ist er kleiner, so wird davon ausgegangen, dass keine Vor/Nacheinspritzung stattgefunden hat.

Bei korrekter Kraftstoffeinspritzung ergibt sich nämlich durch Entlastung des Servoventils ein schneller und in der Amplitude größerer Krafteinbruch als bei einer Fehleinspritzung. Insbesondere bei einer Vor-/Nacheinspritzung mit kleinen Kraftstoffmengen ist diese Unterscheidung von Bedeutung.

Der Gradient des Kraftabfalls nach dem Kraftmaximum F_{H}max kann laufend ermittelt werden, da im Betrieb einer Brennkraftmaschine kontinuierlich Haupteinspritzungen stattfinden. Hierdurch lassen sich die Störeinflüsse aller oben angeführten Effekte eliminieren.

Da infolge von Alterungseffekten auch die Gradienten der Tangenten T1 und T2 nicht konstant bleiben, empfiehlt es sich, in größeren zeitlichen Abständen oder nach einer vorgegebenen Zahl von Kraftstoff-Einspritzungen auch den Gradienten der Tangente T2 (bei Vor- oder Nach-Einspritzungen) zu ermitteln und ggf. zu speichern, um den Grenzwert G sicher bestimmen zu können und zwischen die Werte der Beträge der Gradienten der Tangenten T1 und T2 einzufügen.

Dies geschieht folgendermaßen: wird in adaptiven Schritten der dem Piezoaktor zugeführte Strom i_{P} bei jedem Voreinspritzvorgang um einen bestimmten, kleinen Betrag verringert, so wird die Kraft Fmax des Piezoaktors immer kleiner, die Tangente T1 behält aber in etwa ihre Steigung. Erst in dem Moment, wo ein Strom i_{P} erreicht wird, bei dem keine Kraftstoffeinspritzung mehr stattfindet, wird der Stromverlauf flacher - Figur 2a, Kurve B und Figur 2b, Abschnitt f (gepunkete Kurve) - und "springt" die Tangente von T1 auf T2.

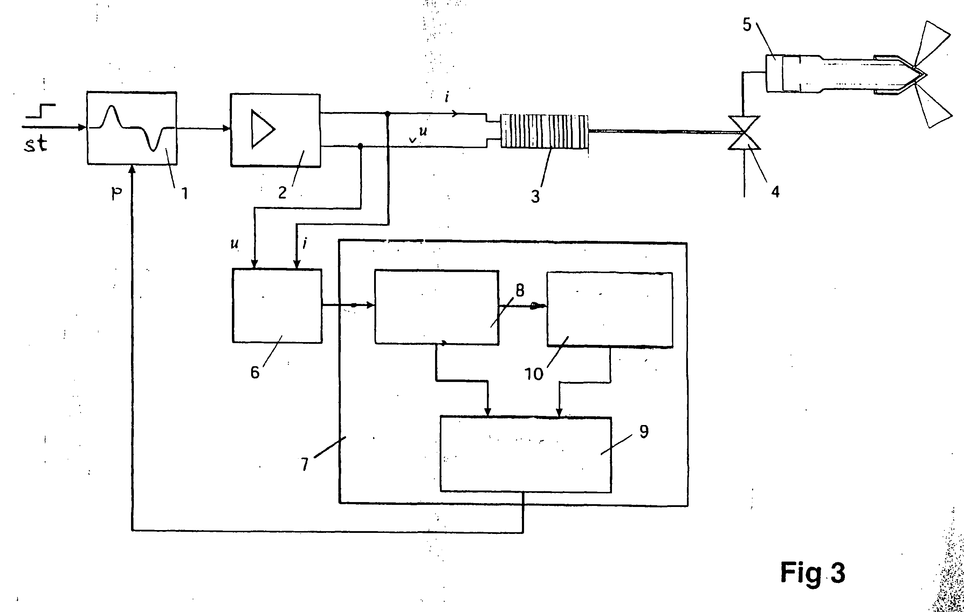

Figur 3 zeigt schematisch eine Vorrichtung zur Durchführung des erfindungsgemäßen Verfahrens, welche mit einem geeigneten Steuerprogramm die elektrische Ansteuerung für die Kraftstoffvoreinspritzung so vornehmen kann, dass neben den Haupteinspritzungen auch sichere Vor-/Nach-Einspritzungen bei geringstmöglicher Kraftstoffüberdosierung erfolgen können.

Diese Vorrichtung weist einen Pulsformer 1 auf, welcher mittels Signalparametern p, die er aus einer Recheneinheit 7 erhält, und Ansteuersignalen st die Signalform für den Ausgangsstrom einer nachfolgenden Stromverstärker-Endstufe 2 erzeugt. Dieser Ausgangsstrom i_{P} wird einem Piezoaktor 3 zugeführt, welcher auf ein Servoventil 4 einwirkt, wodurch ein Kraftstoffeinspritzventil 5 betätigt wird.

Die elektrischen Signale am Eingang des Piezoaktors (der ihm zugeführte Strom i_{P} und die an ihm abfallende Spannung u_{P}) werden gemessen und in einem Analog/Digital-Wandler 6 in digitale Werte umgewandelt und anschließend in der bereits erwähnten Recheneinheit 7 verarbeitet.

Die Recheneinheit 7 weist ein Aktormodell 8 auf, mittels welchem aus den bei einer Haupteinspritzung gemessenen Werten (Strom i_{P} und Spannung u_{P}) der zeitliche Verlauf F_{H}(t) der Kraft F am Ausgang des Piezoaktors 3 (siehe Figur 2a) und daraus der Gradient -dF_{H}/dt des Kraftabfalls nach dem Kraftmaximum F_{H}max, d.h., die Steigung der Tangente T1 (Figur 2b) rechnerisch ermittelt wird.

Dieses Aktormodell beinhaltet die nichtlinearen Zusammenhänge zwischen Ladung bzw. Spannung und mechanischer Auslenkung, sowie Arbeitspunkt-abhängige Parameter. Ferner berücksichtigt das Modell die dielektrische Hysterese des Piezoaktors. Damit erlaubt dieses Aktormodell den Rückschluss von den elektrischen auf die mechanischen Größen und die Simulation des Piezoaktors im Bereich pulsförmiger Auslenkung.

In der Recheneinheit 7 ist auch ein Speicher 10 angeordnet, in welchem der aus einer Haupteinspritzung ermittelte zeitliche Verlauf F_{H}(t) der Kraft F_{H} am Ausgang des Piezoaktors 3 bzw. der daraus ermittelte Gradient -dF_{H}/dt des Kraftabfalls nach dem Kraftmaximum F_{H}max (die Steigung der Tangente T1, siehe Figur 2b), der Grenzwert G und ggf. die Steigung der Tangente T2 gespeichert wird.

Ein Vergleicher 9 vergleicht nun den bei einer Vor- bzw. Nacheinspritzung ermittelten Gradienten -dF_{V}/dt, d.h., dessen Betrag, mit dem im Speicher 10 gespeicherten Grenzwert G. Ist dieser Betrag des Gradienten größer als der Grenzwert G, so wird davon ausgegangen, dass eine korrekte Vor-/Nach-Einspritzung stattgefunden hat. Ist der Betrag des Gradienten kleiner als der Grenzwert G, so wird auf eine Fehleinspritzung geschlossen. Über den Vergleicher 9, in den auch eine Parameterkorrektur integriert ist, erfolgt eine Korrektur der Signalparameter (beispielsweise Amplitude und Kurvenform des Stroms i_{P}), welche dem Pulsformer 1 zugeführt werden, wie bereits oben erwähnt. Mittels Änderung der Signalparameter ändert der Pulsformer 1 die Signalform für die nächste(n) Vor- oder Nach Einspritzung (en). Damit kann sichergestellt werden, dass jeweils für Vor- oder Nach-Einspritzungen eine vorgegebene, auch minimale, Kraftstoffmenge eingespritzt wird.

Alternativ oder ergänzend zu der vom Piezoaktor 3 ausgeübten Kraft F kann auch, wie bereits erwähnt, der Vergleich des Wegverlaufs s(t) oder die Geschwindigkeit v(t) des Piezoaktors 3 mit einem Referenzverlauf als Vergleichsgröße für einen korrekten oder fehlerhaften Einspritzvorgang verwendet werden.

## Patentansprüche

1. Verfahren zum Ansteuern eines Kraftstoff-Einspritzventils mittels eines Piezoaktors (3), insbesondere zur Bestimmung der Kraftstoff-Einspritzmenge bei Vor- oder Nach-Einspritzungen,
**dadurch gekennzeichnet,**
**dass** aus dem dem Piezoaktor (3) bei einer Kraftstoff-Haupteinspritzung zugeführten Strom (i_{P}) und der sich daraufhin an ihm aufbauenden Spannung (u_{P}) der zeitliche Verlauf (dF_{H}/dt) der von ihm auf das Kraftstoff-Einspritzventil (4, 5) ausgeübten Kraft (F_{H}) ermittelt wird,
**dass** aus diesem zeitlichen Verlauf (dF_{H}/dt) der Gradient (-dF_{H}/dt) der Tangente (T1) des nach dem Kraftmaximum (F_{H}max) auftretenden Kraftabfalls bestimmt wird, und
**dass** ein von diesem Gradienten der Tangente (T1) abgeleiteter Grenzwert (G) festgelegt wird,
**dass** aus dem dem Piezoaktor bei einer auf die Kraftstoff-Haupteinspritzung folgenden Nach-Einspritzung - oder Vor- Einspritzung eines folgenden Einspritzvorgangs - zugeführten Strom (i_{P}) und der sich daraufhin an ihm aufbauenden Spannung (u_{P}) der zeitliche Verlauf (dF_{V}/dt) der von ihm auf das Kraftstoff-Einspritzventil (4, 5) ausgeübten Kraft (F_{V}) ermittelt wird,
**dass** aus diesem zeitlichen Verlauf (dF_{V}/dt) der Gradient (-dF_{V}/dt) der Tangente (T1) des nach dem Kraftmaximum (F_{V}max) auftretenden Kraftabfalls bestimmt wird, und
**dass** der Betrag dieses ermittelten Gradienten (-dF_{V}/dt) mit dem Grenzwert (G) verglichen wird,
wobei auf eine stattgefundene Nach- oder Vor-Einspritzung geschlossen wird, wenn der Betrag des Gradienten (-dF_{V}/dt) größer als der Grenzwert (G) ist, und auf eine nicht stattgefundene Nach- oder Vor-Einspritzung geschlossen wird, wenn der Betrag des Gradienten (-dF_{V}/dt) kleiner als der Grenzwert (G) ist.

2. Verfahren nach Anspruch 1, **dadurch gekennzeichnet, dass** der zeitliche Verlauf (dF/dt) der auf das Kraftstoff-Einspritzventil (4, 5) ausgeübten Kraft (F) bei jeder Kraftstoff-Einspritzung mittels eines nichtlinearen Aktormodells (8) ermittelt wird.

3. Verfahren nach Anspruch 1, **dadurch gekennzeichnet, dass** alternativ zum zeitlichen Verlauf (dF/dt) der auf das Kraftstoff-Einspritzventil (4, 5) ausgeübten Kraft (F) der zeitliche Wegverlauf (s(t)) oder die Geschwindigkeit (v(t)) des Piezoaktors (3) als Vergleichsgröße für einen korrekten oder fehlerhaften Einspritzvorgang herangezogen wird.

4. Verfahren nach Anspruch 1, **dadurch gekennzeichnet, dass** in vorgegebenen Zeitabständen oder nach einer vorgegebenen Zahl von Kraftstoff-Einspritzungen der dem Piezoaktor (3) bei jeder Vor- oder Nach-Einspritzung zugeführte Strom (i_{P}) adaptiv jeweils um einen vorgegebenen, kleinen Betrag solange verringert wird, bis der Gradient (-dF_{V}/dt) von dem der Tangente (T1) zugeordneten Wert auf einen deutlich kleineren, der Tangente (T2) zugeordneten Wert springt, bei dem keine Kraftstoff-Einspritzung mehr stattfindet.

5. Verfahren nach Anspruch 4, **dadurch gekennzeichnet, dass** der Grenzwert (G) auf einen Wert festgelegt wird, der zwischen den Betragswerten der Gradienten der Tangente (T1) und der Tangente (T2) liegt.

6. Vorrichtung zur Durchführung des Verfahrens nach Anspruch 1, mit einem von einem Piezoaktor (3) betätigten Kraftstoff-Einspritzventil (4, 5),
**dadurch gekennzeichnet,**
**dass** ein Pulsformer (1) mit einer nachgeschalteten Endstufe
(2) vorgesehen ist, wobei dem Pulsformer (1) Ansteuersignale (st) und Signalparameter (p) zugeführt werden, aus
welchen er die Signalform für den Ausgangsstrom (i_{P}) der
Endstufe (2) erzeugt, welcher dem Piezoaktor (3) zugeführt
wird,
**dass** ein Analog/Digital-Wandler (6) vorgesehen ist, in welchem die am Eingang des Piezoaktors (3) abgreifbaren elektrischen Signale (i_{P}, u_{P}) in digitale Werte gewandelt werden,
**dass** eine Recheneinheit (7) vorgesehen ist, in welcher die digitalen Signale (i_{P}, u_{P}) zu Signalparametern (p) für den Pulsformer (1) verarbeitet werden,
**dass** die Recheneinheit (7) ein nichtlineares Aktormodell (8) aufweist, mittels welchem aus dem dem Piezoaktor (3) bei einer Kraftstoff-Einspritzung zugeführten Strom (i_{P}) und der sich daraufhin an ihm aufbauenden Spannung (u_{P}) der zeitliche Verlauf (d bFH/dt) der vom Piezoaktor (3) auf das Kraftstoff-Einspritzventil (4, 5) ausgeübten Kraft (F_{H}) und daraus der Gradient (-dF/dt) des Kraftabfalls nach dem Kraftmaximum (Fmax) rechnerisch ermittelt wird und daraus ein Grenzwert (G) bestimmt wird,
**dass** die Recheneinheit (7) einen Speicher (10) aufweist, in welchem laufend der Betrag des Gradienten (-dF_{H}/dt) jeder Kraftstoff-Haupteinspritzung und der daraus ermittelte Grenzwert (G) gespeichert werden,
**dass** die Recheneinheit (7) einen Vergleicher (9) aufweist, in welchem der für jede Vor- oder Nacheinspritzung ermittelte Betrag des Gradienten (-dF_{V}/dt) mit dem im Speicher (10) gespeicherten Grenzwert (G) verglichen wird, und
**dass** in den Vergleicher (9) eine Parameterkorrektur integriert ist, welche die dem Pulsformer (1) zuführbaren Signalparameter (p) entsprechend dem Vergleichsergebnis korrigiert.

7. Vorrichtung nach Anspruch 6, **dadurch gekennzeichnet, dass** die Endstufe (2) ein Stromverstärker für hochohmige Ansteuerung des Piezoaktors (3) ist.

8. Vorrichtung nach Anspruch 6, **dadurch gekennzeichnet, dass** die Ermittlung des der Tangente (T2) zugeordneten Gradienten (-dF_{V}/dt), in der Recheneinheit (7) erfolgt.

## Claims

1. Method for controlling a fuel injection valve by means of a piezo actuator (3), in particular for determining the fuel injection quantity during pilot injections or afterinjections
**characterised in that**
- the temporal shape (dF*_{H}*/dt) of the force exerted by the piezo actuator on the fuel injection valve (4, 5) is determined from the current (i*_{P}*) fed to the piezo actuator (3) during a main fuel injection and from the voltage (u*_{P}*) consequently developing thereupon,
- the gradient (-dF*_{H}*/dt) of the tangent (T1) of the drop in force occurring after the maximum force (F*_{H}*max) is determined from this temporal shape (dF*_{H}*/dt), and
- a limit value (G) derived from this gradient of the tangent (T1) is determined,
- the temporal shape (dF*_{V}*/dt) of the force (Fv) exerted by the piezo actuator on the fuel injection valve (4, 5) is determined from the current (i*_{P}*) fed to the piezo actuator during an afterinjection taking place on the main fuel injection or pilot injection of a subsequent injection process and the voltage (u*_{P}*) consequently developing thereupon,
- the gradient (-dF*_{V}*/dt) of the tangent (T1) of the drop in force occurring after the maximum force (F*_{V}*max) is determined from this temporal shape (dF*_{V}*/dt) and
- the sum of this determined gradient (-dF*_{V}*/dt) is compared with the limit value (G),
- with an afterinjection or pilot injection having taken place being concluded if the sum of the gradient (-dF*_{V}*/dt) is greater than the limit value (G), and an afterinjection or pilot injection not having taken place being concluded if the sum of the gradient (-dF*_{V}*/dt) is smaller than the limit value (G).

2. Method according to claim 1, **characterised in that** the temporal shape (dF/dt) of the force (F) exerted on the fuel injection valve (4, 5) is determined for any fuel injection by means of a non-linear actuator model (8).

3. Method according to claim 1, **characterised in that** as an alternative to the temporal shape (dF/dt) of the force (F) exerted on the fuel injection valve (4, 5), the temporal travel curve (s(t)) or the speed (v(t)) of the piezo actuator (3) is used as a comparison variable for a correct or incorrect injection process.

4. Method according to claim 1, **characterised in that** at predetermined intervals or after a predetermined number of fuel injections, the current (i*_{P}*) fed to the piezo actuator (3) during each pilot injection or afterinjection is adaptively reduced in each instance by a predetermined, small amount until the gradient (-dF*_{V}*/dt) of the value assigned to the tangent (T1) jumps to a significantly smaller value assigned to the tangent (T2), at which fuel is no longer injected.

5. Method according to claim 4, **characterised in that** the limit value (G) is determined at a value which lies between the absolute values of the gradients of the tangent (T1) and the tangent (T2).

6. Device for carrying out the method according to claim 1, having a fuel injection valve (4, 5) which is actuated by a piezo actuator (3),
**characterised in that**
a pulse converter (1) is provided with a final stage arranged downstream thereof, with control signals (st) and signal parameters (p) being fed to the pulse converter (1), from which said pulse converter generates the signal form for the output current (ip) of the final stage (2), which is fed to the piezo actuator (3),
- an analogue/digital converter (6) is provided, in which the electrical signals (i*_{P}*, u*_{P}*) which can be measured at the input of the piezo actuator (3) are converted into digital values,
- a computing unit (7) is provided, in which the digital signals (i*_{P}*, u*_{P}*) are processed into signal parameters (p) for the pulse converter (1),
- the computing unit (7) features a non-linear actuator model (8), by means of which the temporal shape (d bFH/dt) of the force (F*_{H}*) exerted by the piezo actuator (3) on the fuel injection valve and therefrom the gradient of the drop of force after the maximum force (Fmax) is determined from the current (i*_{P}*) fed to the piezo actuator (3) during fuel injection and from the voltage (u*_{P}*) consequently developing thereupon, and a limit value (G) defined,
- the computing unit (7) features a memory (10), in which the sum of the gradient (-dF*_{H}*/dt) of each main fuel injection and the limit value (G) determined therefrom are continuously stored,
- the computing unit (7) features a comparator (19), in which the sum of the gradient (-dFᵥ/dt) determined for each pilot injection or afterinjection is compared with the limit value (G) stored in the memory (10), and
- a parameter correction is integrated in the comparator, said parameter correction correcting the signal parameter (p) which can be supplied to the pulse converter (1) in accordance with the comparison result.

7. Device according to claim 6, **characterised in that** the final stage (2) is a current amplifier for high-resistance control of the piezo actuator (3).

8. Device according to claim 6, **characterised in that** the gradient (-dF*_{V}*/dt) assigned to the tangent (T2) is determined in the computing unit (7).

## Revendications

1. Procédé de commande d'un injecteur de carburant au moyen d'un actionneur piézoélectrique (3), en particulier pour la détermination de la quantité de carburant injectée au cours d'une pré-injection ou d'une post-injection, **caractérisé**
- **en ce que** la courbe en fonction du temps (dF_{H}/dt) de la force (F_{H}) exercée par l'actionneur piézoélectrique (3) sur l'injecteur de carburant (4, 5) est déterminée au cours d'une injection principale à partir du courant (i_{P}) fourni audit actionneur et de la tension (u_{P}) qui est appliquée à celui-ci,
- **en ce que** le gradient (-dF_{H}/dt) de la tangente (T1) de la chute de la force se produisant après le maximum de la force (F_{H}max) est déterminé à partir de cette courbe en fonction du temps (dF_{H}/dt), et
- **en ce qu'**il est défini une valeur seuil (G) dérivée de ce gradient de la tangente (T1),
- **en ce que** la courbe en fonction du temps (dFᵥ/dt) de la force (F_{V}) exercée par l'actionneur piézoélectrique (3) sur l'injecteur de carburant (4, 5) est déterminée, à partir du courant fourni (i_{P}) audit actionneur et de la tension (u_{P}) qui est appliquée à celui-ci, au cours d'une post-injection consécutive à l'injection principale - ou d'une pré-injection d'un processus d'injection consécutif,
- **en ce que** le gradient (-dF_{V}/dt) de la tangente (T1) à la chute de la force se produisant après le maximum de la force (F_{V}max) est déterminé à partir de cette courbe en fonction du temps (dF_{V}/dt), et
- **en ce que** la valeur de ce gradient (-dF_{V}/dt) est comparée à la valeur seuil (G), sachant que, si la valeur du gradient (-dF_{V}/dt) est supérieure à la valeur seuil (G), on en déduit que la post-injection ou la pré-injection ont eu lieu et, si la valeur du gradient (-dF_{V}/dt) est inférieure à la valeur seuil (G), on en déduit que la post-injection ou la pré-injection n'ont pas eu lieu.

2. Procédé selon la revendication 1, **caractérisé en ce que** la courbe en fonction du temps (dF/dt) de la force (F) exercée par l'actionneur piézoélectrique (3) sur l'injecteur de carburant (4, 5) est déterminée au moyen d'un modèle d'actionneur (8) non linéaire au cours de chaque injection de carburant.

3. Procédé selon la revendication 1, **caractérisé en ce qu'**en alternative à la courbe en fonction du temps (dF/dt) de la force (F) qui s'exerce sur l'injecteur de carburant (4, 5), la courbe du trajet en fonction du temps (s (t)) ou la vitesse (v(t)) de l'actionneur piézoélectrique (3) sont prises en compte en tant que grandeur de comparaison pour un processus d'injection correct ou incorrect.

4. Procédé selon la revendication 1, **caractérisé en ce que**, dans des intervalles de temps prédéfinis ou après un nombre prédéfini d'injections de carburant, le courant (i_{P}) fourni à l'actionneur piézoélectrique (3) au cours de chaque pré-injection ou post-injection est diminué dans chaque cas, de manière adaptative, d'une faible valeur prédéfinie jusqu'à ce que le gradient (-dF_{V}/dt) saute à partir de la valeur associée à la tangente (T1) à une valeur associée à la tangente (T2) nettement plus faible, à laquelle plus aucune injection de carburant ne s'effectue.

5. Procédé selon la revendication 4, **caractérisé en ce que**, pour la valeur seuil (G), est définie une valeur qui est située entre les valeurs des gradients de la tangente (T1) et de la tangente (T2).

6. Dispositif destiné à la mise en oeuvre du procédé selon la revendication 1, comportant un injecteur (4, 5) actionné par un actionneur piézoélectrique (3), **caractérisé**
- **en ce qu'**il est prévu un générateur d'impulsions (1) avec un étage de sortie (2) monté en série, sachant qu'au générateur d'impulsions (1) sont délivrés des signaux de commande (st) et des paramètres de signal (p), à partir desquels celui-ci génère la forme du signal pour le courant de sortie (i_{P}) de l'étage de sortie (2), lequel alimente l'actionneur piézoélectrique (3),
- **en ce qu'**il est prévu un convertisseur analogique/numérique (6), dans lequel les signaux électriques (i_{P}, u_{P}) qui peuvent être prélevés à l'entrée de l'actionneur piézoélectrique (3) sont convertis en valeurs numériques,
- **en ce qu'**il est prévu un calculateur (7), dans lequel les signaux numériques (i_{P}, u_{P}) sont transformés en paramètres de signal (p) pour le générateur d'impulsions (1),
- **en ce que** le calculateur (7) comporte un modèle d'actionneur (8) non linéaire, au moyen duquel la courbe en fonction du temps (d bF_{H}/dt) de la force (F_{H}) exercée par l'actionneur piézoélectrique (3) sur l'injecteur de carburant (4, 5) est déterminée au cours d'une injection de carburant à partir du courant (i_{P}) fourni audit actionneur et de la tension (u_{P}) qui est appliquée à celui-ci et à partir de là est déterminé par calcul le gradient (-dF/dt) de la chute de la force se produisant après le maximum de la force (Fmax) et à partir de là est déterminé la valeur seuil (G),
- **en ce que** le calculateur (7) comporte une mémoire (10) dans laquelle sont stockées en continu la valeur du gradient (-dF_{H/}dt) de chaque injection de carburant principale et la valeur seuil (G) déterminée à partir de là,
- **en ce que** le calculateur (7) comporte un comparateur (9), dans lequel la valeur du gradient (-dF_{V}/dt) déterminée pour chaque pré-injection ou post-injection est comparée à la valeur seuil (G) stockée dans la mémoire (10), et
- **en ce que** dans le comparateur (9) est intégré un système de correction des paramètres, qui corrige les paramètres de signal (p) qui peuvent être acheminés vers le générateur d'impulsions (1) de manière correspondante au résultat de la comparaison.

7. Dispositif selon la revendication 6, **caractérisé en ce que** l'étage de sortie (2) est un amplificateur de courant pour une commande à valeur ohmique élevée de l'actionneur piézoélectrique (3).

8. Dispositif selon la revendication 6, **caractérisé en ce que** la détermination du gradient (-dF_{V}/dt) associé à la tangente (T2) est effectuée dans le calculateur (7).
